Europäisches Patentamt

(19) European Patent Office  (11) Publication number: **0 072 657**

Office européen des brevets  **B1**

(12) **EUROPEAN PATENT SPECIFICATION**

(45) Date of publication of patent specification: **31.10.84**  (51) Int. Cl.³: **B 23 Q 11/10**

(21) Application number: **82304201.5**

(22) Date of filing: **10.08.82**

(54) **An attachment for fitting to a drive spindle of a machine.**

(30) Priority: **17.08.81 GB 8125087**

(43) Date of publication of application:
**23.02.83 Bulletin 83/08**

(45) Publication of the grant of the patent:
**31.10.84 Bulletin 84/44**

(84) Designated Contracting States:
**AT BE CH DE FR GB IT LI SE**

(56) References cited:
**DD-A- 143 054**
**DE-A-2 400 461**
**DE-A-3 024 585**
**DE-A-3 109 543**
**GB-A- 897 606**
**GB-A-1 256 112**
**US-A-2 777 702**

(73) Proprietor: **BRISTOL ERICKSON LIMITED**
**Tower Road North**
**Warmley Bristol BS15 2XF (GB)**

(72) Inventor: **Reginald, Sidney Parry**
**Bristol Erickson Limited Tower Road North**
**Warmley Bristol BS15 2XF (GB)**

(74) Representative: **Kirby, Harold Douglas Benson**
**et al**
**G.F. Redfern & Company Marlborough Lodge 14**
**Farncombe Road**
**Worthing West Sussex BN11 2BT (GB)**

Courier Press, Leamington Spa, England.

# Description

This invention relates to an attachment for fitting to a drive spindle of a machine, and is particularly, although not exclusively, concerned with a rotary coolant adaptor for an automatic tool-changing machine, which enables a supply of coolant to be fed from a stationary point on the machine through a rotating tool mounted in the adaptor.

In an automatic tool-changing machine, tools are taken in turn from a magazine and fitted to the rotating spindle of the machine. The spindles of such machines commonly have two internal lugs disposed opposite one another which, in use, engage corresponding recesses in the attachment to transmit drive positively to the attachment when the spindle is rotated. The automatic tool-changing equipment therefore has to insert the attachment into the spindle at the correct orientation so that the lugs and recesses will engage one another. With most attachments, this is sufficient to engage the attachment properly with the machine tool. Some attachments, however, have further parts which need to engage parts of the machine, and consequently these further parts must also be oriented correctly. One example of such attachments is a rotary coolant adaptor, where a coolant inlet to the adaptor must be aligned with an outlet on the machine. Also, there are some tools which include a gear housing which needs to be held stationary with respect to the machine, and so has a portion which engages a stationary part of the machine for this purpose. Examples of such tools are tools including several drill bits for simultaneously drilling a number of holes in a set pattern, and tools which incorporate a gearing mechanism for increasing or reducing the speed of the drill bit in comparison with that of the spindle.

To enable this second orientation requirement to be fulfilled, it is possible to lock the stationary part of the attachment with respect to the rotary part in a predetermined angular position while the attachment is removed from the spindle. Then, when the attachment is presented to the spindle in the correct orientation to enable the lugs on the spindle to engage the recesses in the attachment, the stationary part will automatically be presented in the correct orientation to enable it to engage the machine tool in the proper manner. The connection between the stationary part and the rotary part can be automatically disconnected by the action of fitting the attachment to the spindle. A device operating in such a way is shown for example in DD—A—143054. However, different machine tools require different predetermined angular positions of the stationary part relatively to the rotary part, and, hitherto, this has meant that each attachment has had to be specially manufactured to fit a particular machine. This means that a machine tool user has to buy a range of attachments to suit the different machine tools which he operates.

According to the present invention, there is provided an attachment for fitting to a drive spindle of a machine, the attachment comprising a rotary part which, in use, is rotated by the spindle, and a stationary part which, in use, is stationary with respect to the machine, locking means being provided which is engageable when the attachment is removed from the spindle thereby to lock the stationary part rotationally in a predetermined angular position with respect to the rotary part, and which is disengageable when the attachment is fitted to the spindle, the locking means being adjustable so as to alter the predetermined angular position.

The stationary part may include a spring-loaded pin extending parallel to the rotary axis of the rotary part, which pin, in use, is retracted against the spring loading by abutment with the machine. Where the attachment is a rotary coolant adaptor for a machine tool, the spring-loaded pin may have an axial bore to enable coolant to be supplied through the pin to a tool mounted in the adaptor.

The locking means may comprise an arm mounted on the pin which, when the attachment is removed from the spindle and the pin is extended, engages a recess in the rotary part, and, when the attachment is fitted to a machine tool and the pin is retracted, is displaced from the recess, thereby allowing relative rotation between the stationary part and the rotary part. To provide the adjustment of the locking means, the recess may be provided in a ring which surrounds the rotary part, and which can be rotated relatively to the rotary part to adjust the relative orientation of the stationary part and the rotary part when the attachment is removed from the machine and the locking means is engaged. Securing means may be provided for fixing the ring securely in place when an adjusted position has been reached.

For a better understanding of the present invention, and to show how it may be carried into effect, reference will now be made, by way of example, to the accompanying drawings, in which:

Figure 1 is a sectional view of a rotary coolant adaptor;

Figure 2 is an end view looking in the direction of the arrow II; and

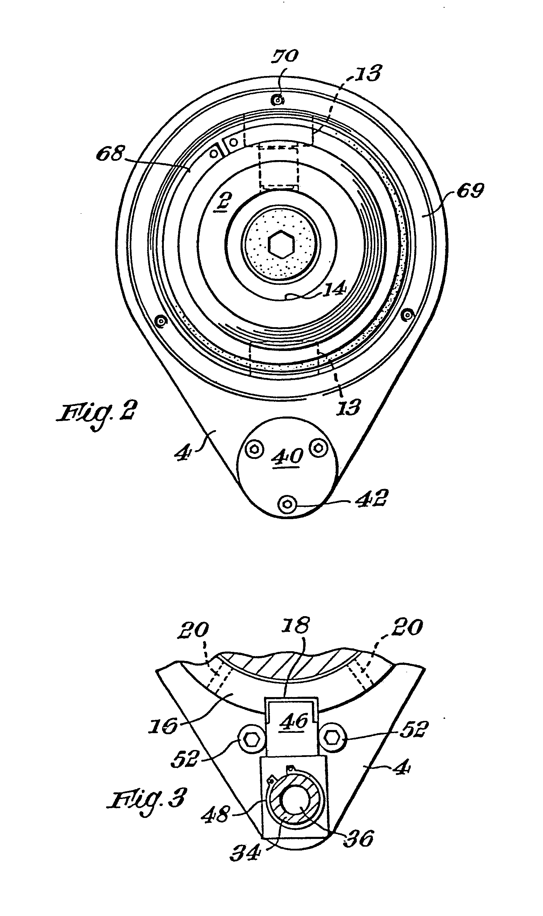

Figure 3 is a scrap view, partly in section, taken on the line III—III looking in the direction of the arrows.

The adaptor shown in the Figures comprises a rotary part 2 and a stationary part 4. The rotary part 2 has a tapered end portion 6 for engagement with a correspondingly tapered bore in a spindle 8 of a machine tool. The tapered portion 6 terminates at a flange 10 which has an annular recess 12 for receiving gripping jaws of automatic tool-changing equipment. The end of the rotary part 2 away from the tapered portion 6 is provided with a bore 14 for receiving a tool such as a drill. The drill normally used with the adaptor shown in the Figures would have one or more passages opening into the bore 14 and extending through the drill shank to near the cutting edges.

Abutting one side of the flange 10, there is a ring 16 provided with a recess 18. The ring 16 is rotatable around the rotary part 2, but it can be secured in a selected position by means of grub screws 20.

A rotary part 2 is rotatably mounted with the stationary part 4 on ball bearings 22 and 23. Metal rings 61 and 62 are provided to protect the ball bearings 22 and 23 respectively from the entry of dirt or moisture. Located between the ball bearings 22 and 23 is an annular member 25. This member is provided with an annular recess 24 and communication between this recess and the ball bearings 22 and 23 is prevented by sealing rings 26 and 27. The annular member 25 is provided with a further annular recess 29 and communication between the recesses 24 and 29 is provided by a plurality of radial drillings such as that shown at 63. The annular member 25 is surrounded by a ring 64 and the inner face of this ring, together with two sealing O-rings 65 and 66, forms a fluid-tight cavity with the recess 29. A plurality of ducts 28 extend radially from the bore 14 to the exterior of the rotary part 2 opening into the recess 24. Thus the bore 14 is in communication with the cavity 29 through the radial ducts 28, the recess 24 and the drillings 63.

A further duct 30 extends from the cavity 29 through a bore 32. A pin 34 having an axial duct 36 is a sliding fit in the bore 32 and is spring-loaded by a spring 38 acting between the pin 34 and a cap 40 fitted by screws 42 to the stationary part 4. Sealing rings 44 prevent leakage of coolant along the bore 32 and also provide some resistance to the sliding movement of the pin 34.

It is to be understood that the bearings 22 and 23 and the annular member 25 are mounted within the ring 64 which is itself fitted in a circular cavity in the stationary part 4. It is, of course, to be understood that the inner races in the ball bearings 22 and 23 rotate with the rotary part 2 and axial movement between these races and the rotary part is prevented by a ring 67 and a circlip 68. The ring 64 is held in position in the stationary part 4 by means of a ring 69 which is externally threaded to cooperate with an internal thread in the circular cavity in the stationary part 4. The ring 69 is locked in position by means of a grub screws 70. Sealing between the ring 64 and the internal surface of this cavity is effected by means of sealing O-rings 71 and 72. Drillings 73 and 74 are provided through the stationary part 4 and the ring 64 to allow communication between the ball bearings 22 and 23 and the exterior in order to allow for drainage and possibly lubrication.

An arm 46 is mounted on the pin 34 and is constrained to move axially with the pin 34 by circlips 48. Rotation between the arm 46 and the pin 34 is prevented by a pin 50. The arm 46 is held between two studs 52 screwed into the stationary part 4, and this arrangement serves to prevent rotation of the pin 34 in the bore 32.

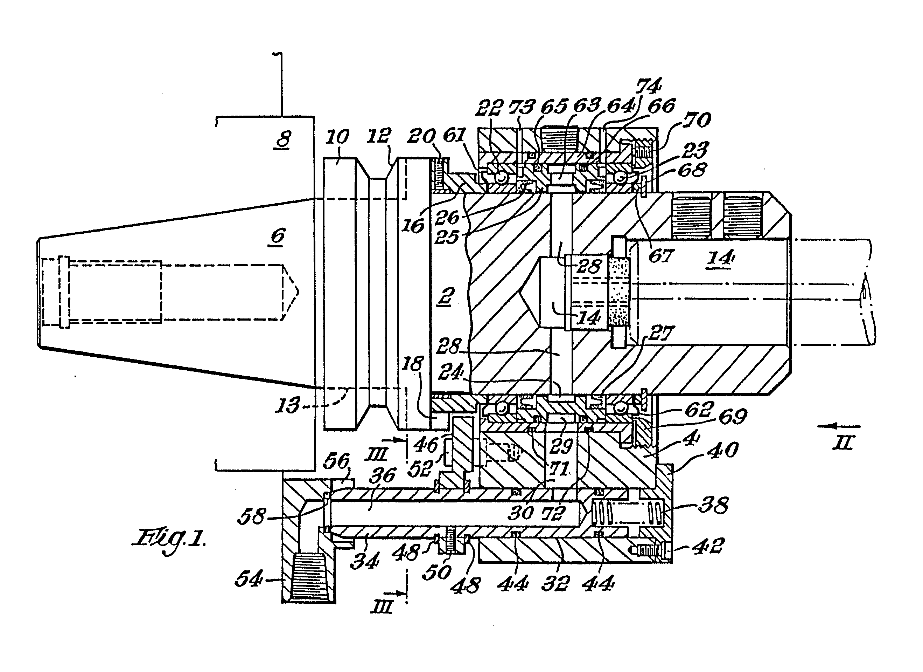

A coolant outlet block 54 is mounted on the machine tool and is connected to a coolant supply. As shown in Figure 1, when the adaptor is fitted to the spindle 8 the pin 34 enters a recess 56 in the block 54 and engages a sealing ring 58 so as to connect the duct 36 to the coolant supply.

When the adaptor shown in the Figures is stored in a magazine ready for use, the spring 38 pushes the pin 34 to the left of the position shown in Figure 1. The arm 46 consequently enters the recess 18 to prevent relative rotation between the rotary part 2 and the stationary part 4. Additionally, this movement takes the duct 36 out of communication with the duct 30. The outward travel of the pin 34 is limited by abutment of the arm 46 against the flange 10.

When the adaptor, with a tool received in the bore 14, is to be fitted to the spindle 8 of the machine tool, gripping jaws of an automatic tool-changing arm engage the recess 12 in the flange 10 and transfer the adaptor to the spindle 8. The tool-changing arm presents the adaptor to the spindle 8 with the recesses 13 aligned with the corresponding lugs on the spindle. By suitably positioning the recess 18, the angular position of the pin 34 about the axis of the rotary part 2 is set to be the same, relative to the recesses 13, and is that of the recess 56 relative to the lugs in the spindle 8. Thus, when the arm 46 is in the recess 18 the pin 34 is aligned with the recess 56. Insertion of the adaptor into the spindle 8 thus brings the pin 34 into contact with the sealing ring 58, and then causes the pin 34 to be depressed against the force of the spring 38. This takes the arm 46 out of the recess 18, and brings the duct 36 into communication with the duct 30. When the spindle 8 is driven in rotation, the rotary part 2 rotates relatively to the stationary part 4. Coolant can be supplied through the block 54 and the ducts 36 and 30 to the cavity 24, from which it can flow through the duct 28 into the bore 14 and thence through the passages in the drill to the cutting edges, so as to cool the drill and the workpiece and to flush swarf from the cutting region.

If the adaptor is to be used with a different machine tool, it is likely that the position of the block 54 relative to the lugs on the spindle 8 will not be the same as on the previous machine. With the adaptor described, it is a simple matter to adjust the position of the pin 34 about the axis of the rotary part 2. This is done by loosening the grub screws 20 and rotating the ring 16 until the recess 18 is at the required position. Markings may be provided on the ring 16 and on the flange 10 to assist this adjustment. When the required position has been reached, the grub screws 20 are tightened again, and the adaptor is ready for use with the new machine.

## Claims

1. An attachment for fitting to a drive spindle of a machine, the attachment comprising a rotary part (2) which, in use, is rotated by the spindle, and a stationary part (4) which, in use, is stationary with respect to the machine, locking means (18, 46) being provided which is engageable when the attachment is removed from the spindle thereby to lock the stationary part rotationally in a predetermined angular position with respect to the rotary part, and which is disengageable when the attachment is fitted to the spindle, characterised by the locking means being adjustable so as to alter the predetermined angular position.

2. An attachment according to Claim 1, wherein the stationary part (4) includes a spring-loaded pin (34) extending parallel to the rotary axis of the rotary part (2) which pin, in use, is retracted against the spring loading by abutment with the machine.

3. An attachment according to Claim 2, wherein the attachment is a rotary coolant adaptor for a machine tool, and wherein the spring-loaded pin (34) has an axial bore (36) to enable coolant to be supplied through the pin to a tool mounted in the adaptor.

4. An attachment according to Claim 2 or Claim 3, wherein the locking means comprises an arm (46) mounted on the pin (34), which arm, when the attachment is removed from the spindle and the pin is extended, engages a recess (18) in the rotary part (2) and, when the attachment is fitted to a machine tool and the pin is retracted, is displaced from the recess thereby allowing relative rotation between the stationary part and the rotary part.

5. An attachment according to Claim 4, wherein, to provide the adjustment of the locking means, the recess (18) is provided in a ring (16) which surrounds the rotary part (2), and is rotatable relative to said rotary part to adjust the relative orientation of the stationary part and the rotary part when the attachment is removed from the machine and the locking means is engaged.

6. An attachment according to Claim 5, wherein securing means (20) are provided to fix the ring (16) securely in place when an adjusted position has been reached.

## Revendications

1. Dispositif additionnel pour le montage sur une broche d'entrainement d'une machine, ce dispositif additionnel comprenant une partie rotative (2) qui, en cours d'utilisation, est entrainée en rotation par la broche, et une partie fixe (4) qui, en cours d'utilisation, reste fixé par rapport à la machine, des moyens de blocage (18, 46) étant prévus pour venir en prise lorsque le dispositif additionnel est retiré de la broche, de manière à bloquer ainsi la partie fixe en rotation, dans une position angulaire prédéterminée par rapport à la partie rotative, et pour être dégagés lorsque le dispositif additionnel est monté sur la broche, dispositif additionnel caractérisé en ce que les moyens de blocage sont réglables de façon qu'il soit possible de modifier la position angulaire prédéterminée.

2. Dispositif additionnel selon la revendication 1, caractérisé en ce que la partie fixe (4) comporte une tige poussée par un ressort (34), disposée parallèlement à l'axe de rotation de la partie rotative (2), cette tige se rétractant, en cours d'utilisation, par butée contre la machine et ce retrait repoussant l'effort du ressort.

3. Dispositif additionnel selon la revendication 2, caractérisé en ce qu'il est constitué par und adaptateur de refroidissement rotatif pour machine-outil, et en ce que la tige poussée par un ressort (34) est percée d'un trou axial (36) permettant d'amener le réfrigérant, à travers la tige, jusqu'à un outil monté dans l'adaptateur.

4. Dispositif additionnel selon la revendication 2, caractérisé en ce que les moyens de blocage sont constitués par un bras (46) monté sur la tige (34), ce bras s'engageant, lorsque le dispositif additionnel est retiré de la broche et lorsque la tige est sortie, dans une cavité (18) de la partie rotative (2), et ce bras sortant de la cavité, lorsque le dispositif additionnel est monté sur une machine-outil et lorsque la tige est rétractée, de manière à permettre ainsi la rotation relative entre la partie fixe et la partie rotative.

5. Dispositif additionnel selon la revendication 4, caractérisé en ce que, pour permettre le réglage des moyens de blocage, la cavité (18) est munie d'un anneau (16) entourant la partie rotative (2) et pouvant tourner par rapport à cette partie rotative pour régler l'orientation relative de la partie fixe et de la partie rotative lorsque le dispositif additionnel est retiré de la machine et lorsque les moyens de blocage sont en prise.

6. Dispositif additionnel selon la revendication 5, caractérisé en ce que des moyens de fixation (20) sont prévus pour fixer l'anneau (16) solidement en place lorsqu'une position de réglage e été atteinte.

## Patentansprüche

1. Zusatzvorrichtung zum Anbringen an einer Maschinenantriebsspindel mit einem drehbaren Teil (2), welches im Gebrauch mit der Spindel rotiert, mit einem stationären Teil (4), welches im Gebrauch mit Bezug auf die Maschine stationär ist und mit einer Sperre (18, 46), die zum Verriegeln des stationären Teils in vorbestimmter Drehwinkelposition gegenüber dem drehbaren Teil einrückbar und die ausrückbar ist, wenn die Zusatzvorrichtung auf die Spindel aufgesetzt ist, dadurch gekennzeichnet, daß die Sperre zum Ändern der vorbestimmten Winkelposition einstellbar ist.

2. Zusatzvorrichtung nach Anspruch 1, bei der das stationäre (Teil (4) einen federbelasteten Stift (34) aufweist, der sich parallel zur Drehachse des drehbaren Teils (2) erstreckt und im Gebrauch durch Anlage an der Maschine gegen die Federvorspannung zurückgeschoben ist.

3. Zusatzvorrichtung nach Anspruch 2, bei der diese ein drehbarer Kühlmitteladapter für eine Werkzeugmaschine ist und bei der der federbelastete Stift (34) eine Axialbohrung (36) aufweist, durch die Kühlmittel durch den Stift hindurch zu einem in dem Adapter befestigten Werkzeug geleitet wird.

4. Zusatzvorrichtung nach Anspruch 2 oder 3, bei der die Sperre einen auf dem Stift (34) befestigten Arm (46) aufweist, welcher nach Abnahme der Zusatzvorrichtung von der Spindel und nach dem Ausfahren des Stiftes in eine Ausnehmung (18) des drehbaren Teils (2) eingerückt ist und welcher bei an die Werkzeugmaschine angesetzter Zusatzvorrichtung und zurückgeschobenem Stift aus der Ausnehmung ausgerückt ist, wodurch eine relative Verdrehung von stationärem Teil und drehbarem Teil möglich wird.

5. Zusatzvorrichtung nach Anspruch 4, bei der dei Ausnehmung (18) zum Justieren der Sperre einen Ring (16) aufweist, der das drehbare Teil (2) umgibt und relativ zu dem drehbaren Teil verdrehbar ist, um die relative Lage des stationären Teils gegenüber dem drehbaren Teil einzustellen, wenn die Zusatzvorrichtung von der Maschine abgenommen und die Sperre eingerückt ist.

6. Zusatzvorrichtung nach Anspruch 5, bei der eine Sicherung (20) zum Fixieren des Ringes (16) in einer Stellung vorgesehen ist, wenn die eingestellte Lage erreicht ist.

Fig. 1.

Fig. 2

Fig. 3